(19) Europäisches Patentamt / European Patent Office / Office européen des brevets

(11) **EP 3 174 212 B1**

(12) **EUROPEAN PATENT SPECIFICATION**

(45) Date of publication and mention
of the grant of the patent:
**04.07.2018 Bulletin 2018/27**

(21) Application number: **15825519.0**

(22) Date of filing: **11.05.2015**

(51) Int Cl.:
***H04B 1/04*** *(2006.01)*

(86) International application number:
**PCT/JP2015/002368**

(87) International publication number:
**WO 2016/013138 (28.01.2016 Gazette 2016/04)**

(54) **TRANSMISSION CONTROL DEVICE AND WIRELESS COMMUNICATION DEVICE PROVIDED WITH SAME**

ÜBERTRAGUNGSSTEUERUNGSVORRICHTUNG UND
DRAHTLOSKOMMUNIKATIONSVORRICHTUNG DAMIT

DISPOSITIF DE COMMANDE DE TRANSMISSION, ET DISPOSITIF DE COMMUNICATIONS SANS
FIL LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2014 JP 2014151032**

(43) Date of publication of application:
**31.05.2017 Bulletin 2017/22**

(73) Proprietor: **Panasonic Intellectual Property
Management Co., Ltd.
Osaka-shi, Osaka 540-6207 (JP)**

(72) Inventors:
• **OMOTO, Yukihiro**
**Osaka 540-6207 (JP)**
• **HORIIKE, Yoshio**
**Osaka 540-6207 (JP)**
• **TERAMOTO, Shota**
**Osaka 540-6207 (JP)**

(74) Representative: **Schwabe - Sandmair - Marx
Patentanwälte Rechtsanwalt
Partnerschaft mbB
Joseph-Wild-Straße 20
81829 München (DE)**

(56) References cited:
**EP-A1- 1 244 208         WO-A1-2011/040507
WO-A1-2011/108103     JP-A- 2002 280 843
JP-A- 2005 229 197       JP-A- 2013 012 973
US-A1- 2014 187 183**

**Description**

TECHNICAL FIELD

The present invention relates to a transmission control device which controls the transmission output of a transmission amplifier that wirelessly transmits a high frequency signal, and a wireless communication device provided with same.

BACKGROUND ART

In recent years, a so-called automatic meter reading system is becoming popular which collects automatically gas and water meter reading data through a network without human intervention. For example, an automatic meter reading system in which a meter installed in each household is connected to an existing public communication network in a wireless manner has been put into practical use.

In the following, a wireless access point connected to an existing public communication network is referred to as a wireless master device. On the other hand, a description will be given, with a wireless device installed in each meter referred to as a wireless slave device.

Typically, the wireless master device of the automatic meter reading system is installed in a telephone pole or the roof of a building. Then, a few tens to a few hundreds of wireless slave devices are accommodated in a communication area, for a single wireless master device.

In the wireless slave device of the automatic meter reading system, an antenna and a wireless circuit are incorporated in the same housing. Therefore, the wireless slave device is not attached to each household in a state where an antenna and a wireless circuit are not connected.

However, in the wireless master device, an antenna and a wireless circuit unit are separately formed, from demand for flexibility of installation. Then, the housing accommodating the wireless circuit unit is connected to the antenna installed on the telephone pole or the roof of a building through a coaxial cable.

At this time, when installing the wireless master device in the field, first, the coaxial cable is connected to the housing accommodating the wireless circuit unit. Then, the antenna is connected to the tip of the coaxial cable. However, construction errors may occur at the time of installation such as performing wireless transmission operation without connecting the antenna to the tip of the coaxial cable. When performing the transmission operation without connecting the antenna, the reflected waves reflected at the tip of the coaxial cable returns to the transmission amplifier of the wireless circuit unit, which may result in damage of the transmission amplifier.

On the other hand, even if the transmission operation is performed without connecting the antenna, the transmission amplifier may not be damaged. Even in that case, if the antenna is attached to the coaxial cable in a state of performing the transmission operation, which may result in damage of the transmission amplifier at the moment of attachment.

Therefore, in order to prevent damage of the transmission amplifier in the transmission control device, the following technique has been disclosed. Specifically, a circulator is inserted between the transmission amplifier and the antenna. Then, the reflected wave reflected from the antenna end is output to the third terminal of the circulator which is not the transmission amplifier side. At this time, this technique is configured to stop the operation of the transmission amplifier if the output of the third terminal is a predetermined size or more (for example, see PTL 1).

Further, as a similar technique, a transmission control device which is configured as follows is disclosed (for example, see PTL 2).

Hereinafter, the configuration of the transmission control device described in PTL 2 will be described with reference to FIG. 4.

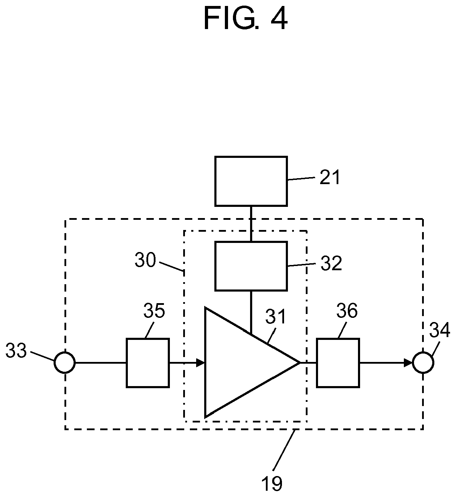

FIG. 4 is a diagram illustrating a configuration example of a transmission control device in the related art.

As illustrated in FIG. 4, the transmission control device in the related art includes amplifier 19 constituting the transmission amplifier. Amplifier 19 includes transistor 31, overcurrent protection element 32, signal input terminal 33, signal output terminal 34, input matching circuit 35, and output matching circuit 36. At this time, overcurrent protection element 32 and transistor 31 are mounted on same semiconductor substrate 30. Further, overcurrent protection element 32 is configured with low resistance conductors formed of low-melting-point metal such as tin, lead, and silver. Therefore, when a current being equal to or greater than a predetermined value flows, overcurrent protection element 32 generates heat and is fused. This blocks the connection between power supply 21 and transistor 31 so as to prevent damage of transistor 31.

Hereinafter, a specific operation of amplifier 19 of the transmission control device in the related art will be described.

First, the signal input to signal input terminal 33 of amplifier 19 is input to transistor 31 through input matching circuit 35. The input signal is amplified by transistor 31. Then, amplifier 19 outputs a predetermined signal from signal output terminal 34 through output matching circuit 36. The signal output from signal output terminal 34 is wirelessly transmitted to the outside through an antenna connected to the coaxial cable. Incidentally, DC power is supplied to transistor 31, from power supply 21 through overcurrent protection element 32.

At this time, when the antenna is not connected to signal output terminal 34 of amplifier 19, a large current being equal to or greater than a predetermined current flows to transistor 31 due to the reflected wave generated in signal output terminal 34. Then, overcurrent protection element 32 is fused by the Joule heat generated by the large current. Thus, the supply of DC power to transistor 31 from power supply 21 is stopped. As a result, damage of transistor 31 is prevented.

However, the configuration of the transmission control device described in PTL 1 needs a circulator. Therefore, in the viewpoint of the number of components, cost and implementation area, there is a problem. Furthermore, configuring an ideal circulator is technically difficult. Therefore, the reflected wave returns to the transmission amplifier side depending on the configuration of the circulator, in some cases. As a result, there is a risk that the transmission amplifier is damaged due to the influence of the reflected waves, before stopping the operation of the transmission amplifier.

Further, the transmission control device described in PTL 2 is configured such that overcurrent protection element 32 formed of tin, lead, silver, or the like is fused by overcurrents and thus damage of transistor 31 is prevented. However, a certain amount of elapsed time is required until overcurrent protection element 32 is fused by an overcurrent. Therefore, there is a problem that transistor 31 may be damaged during the elapsed time until overcurrent protection element 32 is fused.

Citation List

Patent Literature

PTL 1: Japanese Patent Unexamined Publication No. 2012-239064
PTL 2: Japanese Patent Unexamined Publication No. 2006-157707

According to EP 1 244 208 A1, a power amplifying device promptly detects an abnormal condition of a load and permits protection of an output without causing power loss. A test signal having a predetermined frequency and signal level is supplied to an amplifier, and the output level is measured. The measured level is compared with the output level that is projected when the test signal is supplied with an appropriate load connected to the amplifier so as to detect a load condition. If a determination result indicates that the load is shortcircuited or released, then the operation of the amplifier is promptly interrupted.

US 2014/0187183 A1 discloses a transmission signal power control device including: at least one low-power attenuator configured to attenuate amplitude of a transmission signal when an absolute value of the amplitude of the transmission signal is smaller than or equal to a clipping threshold; a power amplifier configured to amplify the transmission signal output from the at least one low-power attenuator; and a control unit configured to stop operation of the power amplifier when the absolute value of the amplitude of the transmission signal is smaller than or equal to a value and operate the power amplifier when the absolute value of the amplitude of the transmission signal is larger than the value.

SUMMARY OF THE INVENTION

The invention is defined by the independent claims, whereas the dependent claims constitute advantageous embodiments.

The present invention provides a transmission control device that prevents damage of a transmission amplifier with a simple configuration.

In other words, a transmission control device of an exemplary embodiment of the present invention at least includes a transmission signal generation unit that generates a test signal when a test is performed, a transmission amplifier that outputs the test signal at amplitude smaller than of a transmission signal in a normal operation, and a control unit. If it is determined that the value of a current to be supplied to the transmission amplifier from a power supply is not within a predetermined operation range, the control unit performs a control so as to stop an operation of the transmission amplifier.

According to this configuration, first, it is determined whether the transmission amplifier is in a normal operation range based on the test signal. If the operation range of the transmission amplifier is outside the predetermined operation range, the control unit stops the operation of the transmission amplifier, and stops the transmission of the transmission signal. On the other hand, if the operation range of the transmission amplifier is within the predetermined operation range, the transmission signal in a normal operation is transmitted. Thus, it is possible to prevent damage caused by an abnormal operation of the transmission amplifier due to reflective waves or the like when the antenna is not connected. This enables the provision of a transmission control device capable of preventing damage to a transmission amplifier with a simple configuration.

BRIEF DESCRIPTION OF DRAWINGS

FIG. 1 is a configuration diagram of a transmission control device according to an embodiment of the present invention.
FIG. 2 is a configuration diagram of a transmission amplifier constituting the transmission control device according to the same embodiment.
FIG. 3 is a configuration diagram of a DC-DC converter constituting the transmission control device according to the same embodiment.
FIG. 4 is a diagram illustrating a configuration example of a transmission control device in the related art.

DESCRIPTION OF EMBODIMENT

Hereinafter, an embodiment of the present invention will be described with reference to the drawings. In addition, the present invention is not limited to this embodiment.

(Embodiment)

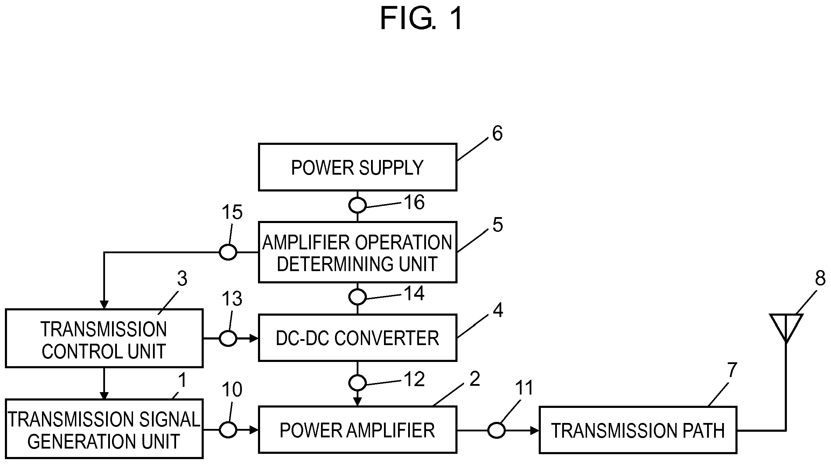

Below, the configuration and operation of a transmission control device of an embodiment of the present invention will be described with reference to FIG. 1.

FIG. 1 is a configuration diagram of a transmission control device according to an embodiment of the present invention. In addition, FIG. 1 illustrates an example of a configuration of a wireless communication device including a power supply, a transmission path, and an antenna, in addition to the transmission control device. Further, the control of the entire transmission control device illustrated in FIG. 1 is performed by, for example, a central control unit (not illustrated) configured with a microcomputer.

As illustrated in FIG. 1, the wireless communication device of the present embodiment at least includes power supply 6, transmission control device, transmission path 7, antenna 8, a central control unit (not illustrated), and the like.

The transmission control device at least includes transmission signal generation unit 1, power amplifier 2, transmission control unit 3, DC-DC converter 4, and amplifier operation determining unit 5, and the like. Power amplifier 2 constitutes a transmission amplifier. Transmission control unit 3 constitutes a control unit. DC-DC converter 4 constitutes an output level switching unit.

The transmission control device of this embodiment operates as follows.

First, if a transmission request is input from the central control unit that controls the whole of the transmission control device, transmission signal generation unit 1 generates a test signal, before generating the transmission signal in a normal operation. The test signal is, for example, a non-modulated signal of 169 MHz.

Next, transmission control unit 3 activates DC-DC converter 4 through connection end 13. At this time, DC-DC converter 4 is activated so as to output a low voltage of, for example, 1V from output end 12 of DC-DC converter 4. Input end 14 of DC-DC converter 4 is connected to power supply 6 through amplifier operation determining unit 5. The output voltage of power supply 6 is, for example, 6V.

Then, the output voltage 1V of DC-DC converter 4 is applied to power amplifier 2. At this time, transmission signal generation unit 1 outputs the generated test signal to input end 10 of power amplifier 2.

The input test signal is power-amplified by power amplifier 2, and is output at amplitude smaller than of the transmission signal in a normal operation, from output end 11. Then, the test signal of small amplitude which is output is emitted into a space from antenna 8 through transmission path 7 normally (when the antenna 8 is connected).

Incidentally, if antenna 8 is normally connected, the load impedance on transmission path 7 side at output end 11 of power amplifier 2 is 50 $\Omega$. That is, the load impedance of 50 $\Omega$ is connected to the output of power amplifier 2. Therefore, a normal operating current flows in power amplifier 2, as a power supply current. In addition, a case where antenna 8 is not normally connected will be described later.

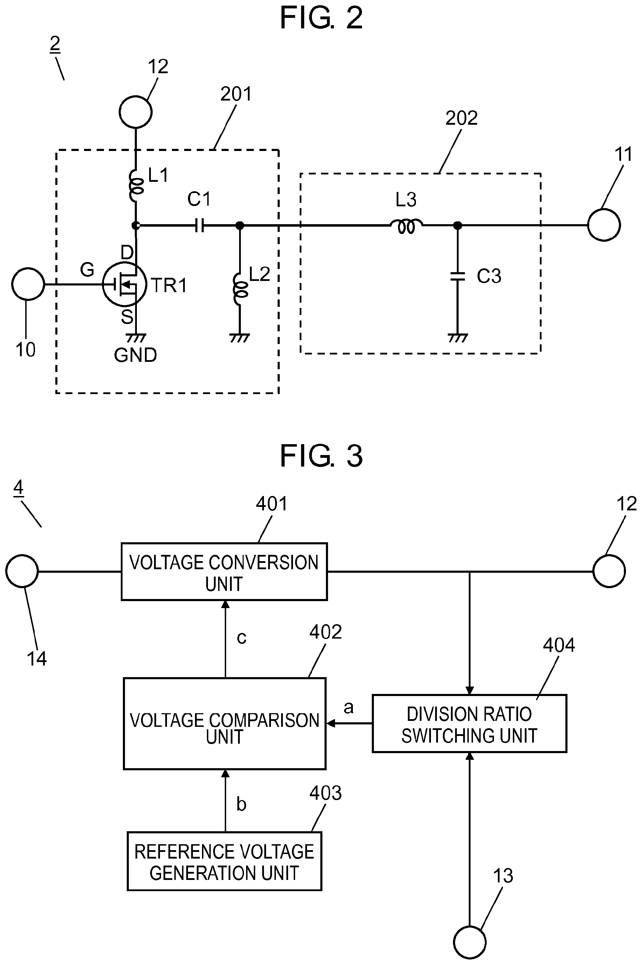

Below, the configuration of the transmission amplifier (power amplifier) of the transmission control device will be described with reference to FIG. 2.

FIG. 2 is a configuration diagram of a transmission amplifier constituting the transmission control device according to the same embodiment.

As illustrated in FIG. 2, power amplifier 2 constituting the transmission amplifier is formed of, for example, a saturation operation-type amplifier, and includes power amplification unit 201, impedance transformation unit 202, or the like. Power amplification unit 201 at least includes transistor TR1 formed of MOSFET, choke coil L1, capacitor C1, and inductor L2. Impedance transformation unit 202 includes inductor L3, capacitor C3, and the like.

Power amplifier 2 operates as follows.

First, a high-frequency signal of 169 MHz, as a test signal, which is generated by transmission signal generation unit 1 is input to input end 10 of power amplification unit 201 of power amplifier 2. The high-frequency signal of 169 MHz which is input to input end 10 is input to gate G of transistor TR1. At this time, source S of transistor TR1 is connected to GND, and drain D is connected to respective one ends of choke coil L1 and capacitor C1. The other end of capacitor C1 is connected to GND through inductor L2. The other end of choke coil L1 connected to drain D is connected to output end 12 of DC-DC converter illustrated in FIG. 1. Incidentally, capacitor C1 functions as a DC blocking capacitor, inductor L2 is inserted in order to cancel the element capacitance between source S and drain D of transistor TR1. This improves the power efficiency of power amplifier 2.

On the other hand, impedance transformation unit 202 of power amplifier 2 is configured with inductor L3 and capacitor C3. Impedance transformation unit 202 transforms the load impedance of 50 Ω by transmission path 7 or the like connected to output end 11 of power amplifier 2 into a lower load impedance. For example, the load impedance of 50 Ω connected to output end 11 is converted to the load impedance of 16 Ω. Thus, the load impedance of 16 Ω is connected to drain D of transistor TR1.

In addition, if power amplifier 2 is a saturation operation-type amplifier, the transmission output of power amplifier 2 is obtained from power supply voltage Vcc of output end 12 of DC-DC converter 4 and the load impedance RL connected to drain D of transistor TR1, as Expression (1).

$$\text{Transmission output} \cong (\text{Square of power supply voltage Vcc of power amplifier 2}) / \text{Load impedance RL} \dots (1)$$

At this time, if the power efficiency of power amplifier 2 is 70%, the power supply current supplied to power amplifier 2 can be obtained as Expression (2).

$$\text{Power supply current} = (\text{Transmission output} / 0.7) / \text{Vcc} \dots (2)$$

In other words, from above Expressions (1) and (2), if power supply voltage Vcc supplied to power amplifier 2 is 1 V and load impedance RL is 16 Ω, the power supply current is about 89 mA. In other words, if the power supply current supplied to power amplifier 2 is 89 mA at the power supply voltage of 1V, power amplifier 2 operates normally.

As described above, when antenna 8 is normally connected to transmission path 7, if the power supply current flows to power amplifier 2, by the test signal, it can be determined that power amplifier 2 operates normally.

Next, an operation when antenna 8 is not connected to transmission path 7 will be described.

In this case, the test signal of 169 MHz, which are output from output end 11 of power amplifier 2, are reflected from the connection end to which antenna 8 of transmission path 7 is connected. This generates stationary waves in transmission path 7. At this time, with respect to the load impedance on transmission path 7 side of output end 11 of power amplifier 2, a value of 0 Ω to infinity is obtained depending on the length of transmission path 7. In other words, a case is considered where the load impedance of power amplifier 2 is 0 Ω depending on the length of transmission path 7. However, in reality, there are losses in transmission path 7 and impedance transformation unit 202. Therefore, the load impedance connected to drain D of transistor TR1 is not 0 Ω, and is approximately 1 Ω at minimum.

Here, if the load impedance is 1 Ω at minimum depending on the length of transmission path 7, the power supply current of power amplifier 2 is 1.4 A, from the above Expressions (1) and (2). In other words, if antenna 8 is not connected, the power supply current of 1.4 A at maximum flows to power amplifier 2 depending on the state (length) of transmission path 7.

On the other hand, if the load impedance on transmission path 7 side of output end 11 of power amplifier 2 is close to infinity, almost no power supply current of power amplifier 2 flows. Therefore, power amplifier 2 is not damaged.

In other words, when the power supply current in a normal operation for a test signal of power amplifier 2 described above is 89 mA, whether or not antenna 8 is connected can be determined based on the value of the power supply current flowing to power amplifier 2 illustrated below. Thus, in the present embodiment, for example, if the value of the power supply current is 30 mA or less or 300 mA or more, it is determined as an abnormal operation due to non-connection of antenna 8. The above numerical value is an example, and in fact, it is determined by experiment or the like during design.

Further, the power supply current flowing power amplifier 2 is a current flowing to output end 12 of DC-DC converter 4.

Thus, conditions for the determination as to the connection of antenna 8 is connected which is performed by amplifier operation determining unit 5 by using the current flowing to output end 12 of DC-DC converter 4 will be described below.

First, the power supply voltage of input end 14 of DC-DC converter 4 is a voltage supplied from power supply 6, and is, for example, 6V. On the other hand, in a case of a test signal, the voltage which is output from output end 12 of DC-DC converter 4 is 1 V. Therefore, if the conversion efficiency of DC-DC converter 4 is assumed to 90%, in a case where the current flowing to input end 16 is out of a predetermined operation range of 5.6 mA or less or 56 mA or more, it is determined as an abnormal operation due to non-connection of antenna 8.

Thus, amplifier operation determining unit 5 measures the current flowing to input end 16 of DC-DC converter 4.

At this time, when the measured current is 5.6 mA or less or 56 mA or more (out of a predetermined operation range), it is determined that antenna 8 is not connected. A signal indicating an abnormality is output to connection end 15 of amplifier operation determining unit 5, and is transmitted to transmission control unit 3.

Next, when the signal indicating an abnormality is output to connection end 15 of amplifier operation determining unit 5, transmission control unit 3 outputs a signal for stopping an output operation to DC-DC converter 4 through connection end 13. Similarly, transmission control unit 3 notifies transmission signal generation unit 1 that the signal indicating an abnormality is output. Then, transmission signal generation unit 1 stops the output of a regular transmission signal for causing power amplifier 2 to normally operate, through input end 10. This prevents damage of power amplifier 2.

On the other hand, in a case where antenna 8 is connected, the current flowing to input end 14 of DC-DC converter 4 is from 5.6 mA to 56 mA within a normal predetermined operation range, and is, for example, 17 mA. Therefore, the signal indicating an abnormality is not output from amplifier operation determining unit 5 to connection end 15.

Thus, transmission control unit 3 instructs DC-DC converter 4 to make the output voltage 4.5 V. At the same time, transmission signal generation unit 1 is controlled so as to transmit the regular transmission signal which is requested from the central control unit. Thus, the regular transmission signal is transmitted from output end 11 of power amplifier 2 to antenna 8 through transmission path 7.

Specifically, if the output voltage Vcc is 4.5 V and the load impedance RL is 16 $\Omega$ in the Expressions (1) and (2), the transmission output is 1.26 W. However, in general, there are losses in impedance transformation unit 202 and transmission path 7. Therefore, in view of the losses, the transmission output supplied to antenna 8 is approximately 1 W. In other words, the regular transmission signal is radiated to the outside from antenna 8 at the transmission output of 1 W.

Next, a case where the transmission control device of the present embodiment illustrated in FIG. 1 is not used will be considered. In other words, if the load impedance connected to drain D of transistor TR1 illustrated in FIG. 2 is 1 $\Omega$ at minimum without antenna 8 being connected, a case where a transmission request is made is considered.

First, the Vcc voltage of DC-DC converter 4 is 4.5V, and the load impedance RL is 1 $\Omega$. In this case, the maximum power supply current flowing to power amplifier 2 becomes a great value of 6.4 A, from Expressions (1) and (2).

On the other hand, in a case of using the transmission control device of the present embodiment, power supply voltage Vcc of power amplifier 2 is set to a lower voltage such as, for example, 1 V, by the test signal, prior to the transmission request signal. In this case, the maximum power supply current flowing to power amplifier 2 becomes 1.4 A. After the amplification by power amplifier 2, the test signal of small amplitude is transmitted to antenna 8 through output end 11 and transmission path 7.

At this time, even if antenna 8 is not connected to transmission path 7, it is possible to suppress the maximum power supply current flowing to power amplifier 2 to approximately 1.4 A. In other words, if the transmission control device of the present embodiment is used, even if a MOSFET of a maximum current rating which is smaller is used as transistor TR1, it is possible to prevent damage of the MOSFET.

A case where a voltage exceeding a maximum rating is applied to drain D is considered as a cause of damage of the MOSFET which is transistor TR1, in addition to a case where a current of a maximum rating or more flows. As described above, if antenna 8 is not connected to transmission path 7, the load impedance connected to drain D of transistor TR1 constituting power amplifier 2 may become approximately 1 $\Omega$.

Thus, below, a description will be given with reference to FIG. 2 on a case where antenna 8 is connected to transmission path 7 in a state where a voltage exceeding a maximum rating is applied to drain D.

First, if antenna 8 is not connected, the load impedance connected to drain D of transistor TR1 is 1 $\Omega$; and if antenna 8 is connected, it is 16 $\Omega$. In other words, the load impedance connected to drain D rapidly changes from 1 $\Omega$ to 16 $\Omega$, before and after the connection of antenna 8.

At this time, it is assumed that choke coil L1 of power amplification unit 201 of power amplifier 2 transiently maintains the current which has flown up to that time, even if the load impedance is changed. In other words, it is assumed that even if the load impedance is 16 $\Omega$, current Ia, which has flown when the load impedance is 1 $\Omega$, flows to the load impedance (16 $\Omega$) by choke coil L1. Therefore, at the moment when antenna 8 is connected to transmission path 7, current Ia transiently flows, and a very high voltage is applied to drain D of transistor TR1. At this time, current Ia is almost the same as the power supply current flowing to power amplifier 2.

In other words, as described above, when the load impedance is 1 Ω and power supply voltage Vcc is 1 V, current Ia is 1.4 A. However, when the load impedance is 1 Ω and power supply voltage Vcc is 4.5 V, current Ia is 6.4 A.

Therefore, without using the transmission control device of the present embodiment, under three conditions: (1) power supply voltage Vcc is 4.5 V, (2) during transmission of the regular transmission signal, based on the transmission request from power amplifier 2, (3) antenna 8 is connected from a status where antenna 8 is not connected, at a moment when antenna 8 is connected to transmission path 7, a voltage of 16 Ω x 6.4 A = 102 V is applied to drain D of transistor TR1. This value significantly exceeds the maximum rating voltage of normal transistor TR1. As a result, transistor TR1 is damaged.

However, according to the transmission control device of the present embodiment, even if antenna 8 is attached to transmission path 7 before amplifier operation determining unit 5 detects an abnormality and the output operation of DC-DC converter 4 is stopped, only a voltage of 16 Ω x 1.4 A = 22.4 V is applied to drain D of transistor TR1. The maximum rating of the MOSFET which is transistor TR1 is normally about 30 V. As a result, even in the above conditions, it is possible to prevent the damage of transistor TR1 in advance.

Below, a specific configuration of the DC-DC converter of the transmission control device of the present embodiment will be described with reference to FIG. 3.

FIG. 3 is a configuration diagram of a DC-DC converter constituting the transmission control device according to the same embodiment.

As illustrated in FIG. 3, DC-DC converter 4 constituting the output level switching unit at least includes voltage conversion unit 401, voltage comparison unit 402, reference voltage generation unit 403, division ratio switching unit 404, and the like. Basically, DC-DC converter 4 converts the DC voltage applied to input end 14 into a DC voltage by voltage conversion unit 401, and outputs the converted voltage to output end 12.

Division ratio switching unit 404 divides the DC voltage generated in output end 12, for example, by resistor division, and outputs the divided voltage to terminal a.

Reference voltage generation unit 403 outputs a DC voltage which is a reference for comparison performed by voltage comparison unit 402, to terminal b. For example, a DC voltage of 0.8 V is output to terminal b.

Voltage comparison unit 402 compares the reference voltage 0.8 V of terminal b with the voltage of terminal a, and outputs an error voltage to terminal c.

Voltage conversion unit 401 controls the voltage to be output to output end 12 such that the error voltage generated in terminal c is zero. Thus, the voltage which is output from division ratio switching unit 404 to terminal a is controlled so as to be the same as the reference voltage 0.8 V of terminal b.

Specifically, if the division ratio of division ratio switching unit 404 is 1 : 0.8, the DC voltage of output end 12 is 1 V. This voltage corresponds to a voltage which is output to power amplifier 2 when transmitting the test signal. Further, if the division ratio is 4.5 : 0.8, the DC voltage of output end 12 is 4.5 V. This voltage corresponds to a voltage which is output to power amplifier 2 when transmitting the transmission signal in a normal operation. Connection end 13 is a control terminal for switching the division ratio, based on a signal from the central control unit. In other words, it is possible to switch the division ratio of division ratio switching unit 404 to 1 : 0.8 or 4.5 : 0.8, by controlling connection end 13.

In addition, usually, as described above, transistor TR1 constituting power amplifier 2 is damaged in the following conditions.

First, there is a case where a large current of a maximum rating or more flows to drain D of transistor TR1.

Next, there is a case where a high voltage of a maximum rating or more is applied to drain D of transistor TR1. In addition, even when a high voltage is applied to drain D, it is prerequisite that the large current flowed immediately before.

Thus, in the present embodiment, a case has been described where an upper limit and a lower limit are set as the current range of an abnormal operation of power amplifier 2, but the present invention is not limited thereto. For example, in view of the damage of transistor TR1, only the upper limit may be set as the current range of an abnormal operation of power amplifier 2. This allows the determination for the lower limit not to be required. As a result, this facilitates the configuration of amplifier operation determining unit 5.

Further, according to the present embodiment, the description has been given on the configuration in which the test signal generated by transmission signal generation unit 1 are always transmitted before transmitting the regular transmission signal, but the present invention is not limited thereto. For example, only when a contractor checks communication state after construction of attaching a wireless device equipped with the transmission control device of the present embodiment, a test signal may be transmitted before a communication checking signal is transmitted. Thus, in the actual communication after completing construction, there is no need to perform a redundant operation such as a necessarily transmitting test signal before transmission. As a result, this leads to reduction in communication time and reduction in power consumption.

INDUSTRIAL APPLICABILITY

Since the transmission control device of the present invention is capable of preventing damage of the transmission amplifier even if the transmission operation is performed in a state where the antenna is not connected to the transmission amplifier, it is useful in various wireless communication devices. In particular, the present invention is useful in a wireless communication device in which an antenna and a wireless communication device body including the transmission control device are separately formed, and the wireless communication device body and the antenna are connected through a coaxial cable.

REFERENCE MARKS IN THE DRAWINGS

| | |
|---|---|
| 1 | TRANSMISSION SIGNAL GENERATION UNIT |
| 2 | POWER AMPLIFIER (TRANSMISSION AMPLIFIER) |
| 3 | TRANSMISSION CONTROL UNIT (CONTROL UNIT) |
| 4 | DC-DC CONVERTER (OUTPUT LEVEL SWITCHING UNIT) |
| 5 | AMPLIFIER OPERATION DETERMINING UNIT |
| 6, 21 | POWER SUPPLY |
| 7 | TRANSMISSION PATH |
| 8 | ANTENNA |
| 10, 14, 16 | INPUT END |
| 11, 12 | OUTPUT END |
| 13, 15 | CONNECTION END |
| 19 | AMPLIFIER |
| 30 | SEMICONDUCTOR SUBSTRATE |
| 31, TR1 | TRANSISTOR |
| 32 | OVERCURRENT PROTECTION ELEMENT |
| 33 | SIGNAL INPUT TERMINAL |
| 34 | SIGNAL OUTPUT TERMINAL |
| 35 | INPUT MATCHING CIRCUIT |
| 36 | OUTPUT MATCHING CIRCUIT |
| 201 | POWER AMPLIFICATION UNIT |
| 202 | IMPEDANCE TRANSFORMATION UNIT |
| 401 | VOLTAGE CONVERSION UNIT |
| 402 | VOLTAGE COMPARISON UNIT |
| 403 | REFERENCE VOLTAGE GENERATION UNIT |
| 404 | DIVISION RATIO SWITCHING UNIT |
| C1, C3 | CAPACITOR |
| L1 | CHOKE COIL |
| L2, L3 | INDUCTOR |

**Claims**

1. A transmission control device at least comprising:

   a transmission signal generation unit (1) that generates a test signal when a test is performed;
   a transmission amplifier (2) that outputs the test signal; and
   a control unit (3),
   **characterized in that**
   the transmission amplifier (2) outputs the test signal at an amplitude smaller than in a normal operation and **in that** the control unit (3) performs control so as to stop an operation of the transmission amplifier (2), if it is determined that a value of a current to be supplied to the transmission amplifier (2) from a power supply (6) is not within a predetermined operation range.

2. The transmission control device of claim 1,
   wherein the transmission amplifier (2) is a saturation operation-type transmission amplifier that varies a transmission output depending on a power supply voltage which is supplied to the transmission amplifier (2).

3. The transmission control device of claim 1,
wherein the power supply (6) of the transmission amplifier (2) is configured with a DC-DC converter (4) capable of switching an output voltage.

4. The transmission control device of claim 3,
wherein the DC-DC converter (4) outputs an output voltage which is smaller than in a normal operation, when the test is performed.

5. The transmission control device of claim 1, wherein
the transmission amplifier (2) power-amplifies a signal which are generated by the transmission signal generation unit (1),
the control unit (3) controls an operation of the transmission amplifier (2), and wherein the transmission control device further comprises
an amplifier operation determining unit (5) that determines whether or not the transmission amplifier (2) is within a predetermined operation range and
an output level switching unit that switches an output level of the transmission amplifier (2),
wherein the transmission signal generation unit (1)
generates the test signal before generating a transmission signal in the normal operation, controls the output level switching unit so as to cause the transmission amplifier (2) to output the test signal,
activates the control unit (3) to stop the operation of the transmission amplifier (2) when the amplifier operation determining unit (5) determines that the transmission amplifier (2) is not within the predetermined operation range, and controls the output level switching unit so as to cause the transmission amplifier (2) to output the transmission signal in the normal operation which are generated by the transmission signal generation unit (1), when it is determined that the transmission amplifier (2) is within the predetermined operation range by the transmission signal generation unit (1) from the transmission amplifier (2).

6. The transmission control device according to any one of claims 1 to 5, wherein the transmission control device is included in a wireless communication device which further includes:

a transmission path (7); and
an antenna (8).

**Patentansprüche**

1. Sendesteuerungsvorrichtung, die wenigstens umfasst:

eine Sendesignalerzeugungseinheit (1), die ein Testsignal erzeugt, wenn ein Test durchgeführt wird;
einen Sendeverstärker (2), der das Testsignal ausgibt; und
eine Steuerungseinheit (3),
**dadurch gekennzeichnet, dass**
der Sendeverstärker (2) das Testsignal mit einer Amplitude ausgibt, die kleiner ist als im normalen Betrieb, und dadurch, dass die Steuerungseinheit (3) die Steuerung so durchführt, dass sie den Betrieb des Sendeverstärkers (2) anhält, wenn bestimmt wird, dass ein Wert eines dem Sendeverstärker (2) von einer Stromversorgung (6) zu liefernden Stroms nicht in einem vorgegebenen Betriebsbereich liegt.

2. Sendesteuerungsvorrichtung nach Anspruch 1, wobei der Sendeverstärker (2) ein Sendeverstärker von der Art des Sättigungsbetriebs ist, der eine Sendeausgabe abhängig von einer Stromversorgungsspannung variiert, die dem Sendeverstärker (2) geliefert wird.

3. Sendesteuerungsvorrichtung nach Anspruch 1, wobei die Stromversorgung (6) des Sendeverstärkers (2) mit einem Gleichstromwandler (4) konfiguriert ist, der in der Lage ist, eine Ausgangsspannung zu schalten.

4. Sendesteuerungsvorrichtung nach Anspruch 3, wobei der Gleichstromwandler (4) eine Ausgangsspannung ausgibt, die kleiner ist als in einem normalen Betrieb, wenn der Test durchgeführt wird.

**5.** Sendesteuerungsvorrichtung nach Anspruch 1, wobei
der Sendeverstärker (2) die Leistung eines Signals verstärkt, das durch die Sendesignalerzeugungseinheit (1) erzeugt wurde,
die Steuerungseinheit (3) den Betrieb des Sendeverstärkers (2) steuert und wobei die Sendesteuerungsvorrichtung des Weiteren eine
Verstärkerbetriebsbestimmungseinheit (5), die bestimmt, ob sich der Sendeverstärker (2) in einem vorgegebenen Betriebsbereich befindet oder nicht, und eine Ausgangspegelschalteinheit umfasst, die den Ausgangspegel des Sendeverstärkers (2) schaltet,
wobei die Sendesignalerzeugungseinheit (1)
ein Testsignal erzeugt, bevor sie ein Sendesignal im normalen Betrieb erzeugt,
die Ausgangspegelschalteinheit steuert, um den Sendeverstärker (2) zu veranlassen, das Testsignal auszugeben,
die Steuerungseinheit (3) aktiviert, um den Betrieb des Sendeverstärkers (2) anzuhalten, wenn die Verstärkerbetriebsbestimmungseinheit (5) bestimmt, dass sich der Sendeverstärker (2) nicht im vorgegebenen Betriebsbereich befindet, und
die Ausgangspegelschalteinheit so steuert, dass der Sendeverstärker (2) veranlasst wird, das Sendesignal im normalen Betrieb auszugeben, das durch die Sendesignalerzeugungseinheit (1) erzeugt wurde, wenn durch die Sendesignalerzeugungseinheit (1) von dem Sendeverstärker (2) bestimmt wird, dass sich der Sendeverstärker (2) im vorgegebenen Betriebsbereich befindet.

**6.** Sendesteuerungsvorrichtung nach einem der Ansprüche 1 bis 5, wobei die Sendesteuerungsvorrichtung in einer drahtlosen Kommunikationsvorrichtung enthalten ist, die des Weiteren aufweist:

einen Sendeweg (7) und
eine Antenne (8).

## Revendications

**1.** Dispositif de commande de transmission comprenant au moins :

une unité de génération de signal de transmission (1) qui génère un signal de test lorsqu'un test est effectué ;
un amplificateur de transmission (2) qui émet le signal de test ; et
une unité de commande (3),
**caractérisé en ce que** :
l'amplificateur de transmission (2) émet le signal de test à une amplitude inférieure à celle d'un fonctionnement normal et **en ce que** l'unité de commande (3) effectue une commande de manière à arrêter un fonctionnement de l'amplificateur de transmission (2), si l'on détermine qu'une valeur d'un courant devant être fourni à l'amplificateur de transmission (2) depuis une alimentation électrique (6) ne se situe pas dans une plage de fonctionnement prédéterminée.

**2.** Dispositif de commande de transmission selon la revendication 1,
dans lequel l'amplificateur de transmission (2) est un amplificateur de transmission de type fonctionnement en saturation qui fait varier une sortie de transmission en fonction d'une tension d'alimentation électrique qui est fournie à l'amplificateur de transmission (2).

**3.** Dispositif de commande de transmission selon la revendication 1,
dans lequel l'alimentation électrique (6) de l'amplificateur de transmission (2) est conçue avec un convertisseur CC-CC (4) capable de commuter une tension de sortie.

**4.** Dispositif de commande de transmission selon la revendication 3,
dans lequel le convertisseur CC-CC (4) émet une tension de sortie qui est inférieure à celle d'un fonctionnement normal, lorsque le test est effectué.

**5.** Dispositif de commande de transmission selon la revendication 1, dans lequel
l'amplificateur de transmission (2) amplifie en puissance un signal qui est généré par l'unité de génération de signal de transmission (1),
l'unité de commande (3) commande un fonctionnement de l'amplificateur de transmission (2), et le dispositif de commande de transmission comprenant en outre

une unité de détermination de fonctionnement d'amplificateur (5) qui détermine si l'amplificateur de transmission (2) se situe ou non dans une plage de fonctionnement prédéterminée et

une unité de commutation de niveau de sortie qui commute un niveau de sortie de l'amplificateur de transmission (2), l'unité de génération de signal de transmission (1)

générant le signal de test avant de générer un signal de transmission dans le fonctionnement normal,

commande l'unité de commutation de niveau de sortie de manière à amener l'amplificateur de transmission (2) à émettre le signal de test,

active l'unité de commande (3) pour arrêter le fonctionnement de l'amplificateur de transmission (2) lorsque l'unité de détermination de fonctionnement de l'amplificateur (5) détermine que l'amplificateur de transmission (2) ne se situe pas dans la plage de fonctionnement prédéterminée, et

commande l'unité de commutation de niveau de sortie de manière à amener l'amplificateur de transmission (2) à émettre le signal de transmission dans le fonctionnement normal qui est généré par l'unité de génération de signal de transmission (1), lorsqu'on détermine que l'amplificateur de transmission (2) se situe dans la plage de fonctionnement prédéterminée par l'unité de génération de signal de transmission (1) depuis l'amplificateur de transmission (2).

6. Dispositif de commande de transmission selon l'une quelconque des revendications 1 à 5, dans lequel le dispositif de commande de transmission est compris dans un dispositif de communication sans fil qui comprend en outre :

une voie de transmission (7) ; et
une antenne (8).

# FIG. 1

# FIG. 2

<u>2</u>

12

201

L1

C1

202

L3

11

D

G

TR1

L2

C3

10

S

GND

# FIG. 3

<u>4</u>

401

12

VOLTAGE CONVERSION
UNIT

14

c

402

404

a

VOLTAGE COMPARISON
UNIT

DIVISION RATIO
SWITCHING UNIT

b

403

REFERENCE VOLTAGE
GENERATION UNIT

13

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012239064 A
- JP 2006157707 A
- EP 1244208 A1
- US 20140187183 A1